# EUROPEAN PATENT APPLICATION

(11) **EP 4 841 919 A1**
(43) Date of publication of application: **18.11.2026**
(21) Application number: 25747442.9
(22) Date of filing: 07.01.2025
(51) Int. Cl.: H04L 1/1607

(54) **MESSAGE PROCESSING METHOD AND ACCESS DEVICE**

(30) Priority: 30.01.2024 CN 202410135037
(71) Applicant: Huawei Technologies Co., Ltd., Shenzhen, Guangdong 518129 (CN)
(72) Inventor: DUAN, Yingjie, Shenzhen, Guangdong 518129 (CN); YANG, Fei, Shenzhen, Guangdong 518129 (CN); REN, Shoushou, Shenzhen, Guangdong 518129 (CN)
(74) Representative: Pfenning, Meinig & Partner mbB
(86) International application number: PCT/CN2025/070951
(87) International publication number: WO 2025/161866

(57) **Abstract**

This application provides a packet processing method, so that an access device can buffer a packet, and the access device retransmits the packet when a terminal fails to receive the packet. In this way, flow transmission completion time can be effectively shortened, and transmission efficiency can be improved. The method includes: after receiving a packet sent by a server, when network reference data satisfies a buffering condition, storing the packet in a local buffer; after sending the packet to a terminal, receiving an acknowledgment packet sent by the terminal; when the acknowledgment packet and the packet belong to a same data flow, and an acknowledgment number of the acknowledgment packet is the same as a sequence number of the packet, increasing a duplicate acknowledgment count of the packet by one; and when the duplicate acknowledgment count of the packet reaches a retransmission threshold, sending the packet in the local buffer to the terminal. This application further provides an access device, a computer-readable medium, and a computer program product that can implement the foregoing method.

## Description

This application claims priority to Chinese Patent Application No. 202410135037.9, filed with the China National Intellectual Property Administration on January 30, 2024, and entitled "PACKET PROCESSING METHOD AND ACCESS DEVICE", which is incorporated herein by reference in its entirety.

### TECHNICAL FIELD

This application relates to the communication field, and in particular, to a packet processing method, an access device, a computer-readable storage medium, and a computer program product.

### BACKGROUND

The transmission control protocol (transmission control protocol, TCP) is a reliable communication protocol. When a data packet loss occurs during transmission, the TCP retransmits the lost data packet.

During actual application, a last-mile wireless link on a wide area network is unstable, characterized by large bandwidth fluctuation, interference, and wall penetration, which result in a large amount o packet loss during transmission. There is a long closed-loop for TCP end-to-end feedback and retransmission, which requires passing through a complete control loop. That is, an acknowledgment packet needs to travel from a terminal to a server through an access device, and then a retransmitted packet travels from the server to the terminal through the access device. This results in a high packet loss recovery latency, thereby severely degrading the TCP flow completion time (flow completion time, FCT) and user experience.

### SUMMARY

This application provides a packet processing method, so that an access device can buffer a packet, and can retransmit the packet when a terminal fails to receive the packet. In this way, flow completion time can be effectively shortened, and transmission efficiency can be improved.

According to a first aspect, a packet processing method is provided. The method is applied to an access device that is separately connected to a server and a terminal, a TCP connection is established between the server and the terminal, and the method includes: The access device obtains network reference data when receiving a packet sent by the server. When the network reference data satisfies a buffering condition, it indicates that network quality is poor, and the access device stores the packet in a local buffer. After sending the packet to the terminal, the access device receives an acknowledgment packet sent by the terminal. When the acknowledgment packet and the packet belong to a same data flow, and an acknowledgment number of the acknowledgment packet is the same as a sequence number of the packet, the access device increases a duplicate acknowledgment count of the packet by one. When the duplicate acknowledgment count of the packet reaches a retransmission threshold, the access device obtains the packet from the local buffer, and sends the packet to the terminal. When the network reference data does not satisfy the buffering condition, the packet is not stored.

The network reference data includes at least one of current wireless round-trip time (wireless round-trip time, WRTT) or a current packet dequeue interval. WRTT is round-trip time of a packet between the access device and the terminal, and is obtained by collecting statistics on a historical packet and a corresponding acknowledgment packet. The current WRTT may be ${T}_{i}^{′} - {T}_{i}$ or $\frac{1}{j + 1} {\sum }_{i - j}^{i} \left({T}_{i}^{′}-{T}_{i}\right) , {T}_{i}^{′}$ is a moment at which an acknowledgment packet for an i^{th} packet is received, and *Tᵢ* is a moment at which the i^{th} packet from the server is received, where i and j are positive integers, and j<i.

According to this implementation, the packet can be stored in the access device in a case of poor network quality, and when the acknowledgment packet satisfies a retransmission condition (for example, the duplicate acknowledgment count of the packet reaches the retransmission threshold), the access device retransmits the packet to the terminal. Compared with packet retransmission by the server, packet retransmission by the access device can effectively shorten a packet retransmission distance, reduce packet retransmission steps, and reduce retransmission duration.

In some possible implementations, the buffering condition includes: The current WRTT is greater than or equal to a product of historical maximum WRTT and a random coefficient. Each time a packet is received, a random coefficient may be obtained from [0, 1], and whether the current WRTT is greater than or equal to a product of the historical maximum WRTT and the random coefficient is determined. If the current WRTT is greater than or equal to the product, it indicates that quality of a current wireless link is poor, and the packet is stored. If the current WRTT is less than the product, it indicates that the quality of the current wireless link is good, and the packet is not stored. Because a buffer capacity of the access device is limited, if the random coefficient is replaced with a fixed coefficient, the local buffer is likely to be insufficient. In this case, a subsequent packet is lost, and a tail packet cannot be retransmitted. When the random coefficient is used, packet probabilistic caching exhibits randomness, and storage overheads can be reduced. Practical testing shows that compared with a buffering condition using the fixed coefficient, the buffering condition using the random coefficient can improve a success rate of retransmission of a tail packet and effectively reduce flow completion time.

In some possible implementations, the buffering condition includes: The current packet dequeue interval is greater than or equal to a preset time interval. If the current packet dequeue interval is greater than or equal to the preset time interval, it indicates that quality of a wireless link is poor, and the packet is buffered. If the current packet dequeue interval is less than the preset time interval, it indicates that quality of the wireless link is good, and the packet is not stored.

In some possible implementations, the buffering condition includes: The current WRTT is greater than or equal to the product of the historical maximum WRTT and the random coefficient, and the current packet dequeue interval is greater than or equal to the preset time interval. If the current WRTT is greater than or equal to the product of the historical maximum WRTT and the random coefficient, and the current packet dequeue interval is greater than or equal to the preset time interval, it indicates that quality of the wireless link is poor, and the packet is buffered. If the current WRTT is less than the product of the historical maximum WRTT and the random coefficient, or the current packet dequeue interval is less than the preset time interval, it indicates that quality of the wireless link is poor, and the packet is not stored.

In some possible implementations, when the network reference data satisfies the buffering condition, when a packet data volume of the local buffer exceeds a buffering threshold and the current WRTT is greater than minimum WRTT of buffered packets, a packet corresponding to the minimum WRTT is deleted from the local buffer, and the packet is stored in the local buffer. The buffering threshold may be a value close to or equal to a size of the local buffer, and may be specifically set according to an actual situation. This is not limited in this application. Smaller WRTT indicates better wireless link quality, and therefore the packet with the minimum WRTT has a lowest probability of retransmission. Replacing the buffered packet having the minimum WRTT with the current packet can increase a probability of local retransmission in a case of limited buffering.

In some possible implementations, after the acknowledgment packet sent by the terminal is received, a target packet of a data flow to which the acknowledgment packet belongs is deleted from the local buffer. A sequence number of the target packet is prior to the acknowledgment number of the acknowledgment packet. In other words, the target packet is a duplicate of a packet already received by the terminal, and the target packet does not need to be retransmitted. Therefore, deleting the target packet can release buffering space, reduce storage overheads, and facilitate storage of a subsequent packet.

In some possible implementations, after a finish packet sent by the terminal or the server is received, a packet of a data flow to which the finish packet belongs is deleted from the local buffer. When the data flow ends, the packet of the data flow does not need to be retransmitted. Therefore, deleting the packet of the data flow can reduce storage overheads, to facilitate storage of a packet of another data flow.

In some possible implementations, when a sequence number of a buffered packet is different from the acknowledgment number of the acknowledgment packet, it indicates that a packet requested by the acknowledgment packet is not stored in the local buffer, and the acknowledgment packet is sent to the server, to transparently transmit a TCP packet.

In some possible implementations, when the acknowledgment number of the acknowledgment packet is the same as the sequence number of the packet and the duplicate acknowledgment count of the packet is less than the retransmission threshold, the acknowledgment packet is sent to the server, to transparently transmit a TCP packet.

In some possible implementations, a lifetime of a data flow is obtained, and when the lifetime of the data flow is greater than a life threshold, a packet of the data flow is deleted from the local buffer. The life threshold may be implemented by using a timer of a data flow. When the lifetime of the data flow is greater than the life threshold, it indicates that storage overheads of packets of the data flow are high, and computing overheads for maintaining a record of the data flow are also high. Deleting the packets of the data flow can reduce computing overheads and storage overheads for a long flow, and increase available buffers for a short flow.

In some possible implementations, after the packet sent by the server is received, a timer is set for the packet. If no acknowledgment packet for the packet is received when the timer expires, it indicates that the event that the terminal fails to receive the packet times out, and the packet is obtained from the local buffer, and the packet is sent to the terminal. Optionally, a start moment of the timer is a moment at which the packet is received. Duration of the timer is a timeout retransmission duration threshold. In this way, a method for timeout-based packet retransmission by the access device is provided, and reduces packet retransmission between the server and the access device compared with a method for timeout-based packet retransmission by the server. Therefore, a transmission distance of a retransmitted packet is shortened, retransmission duration is reduced, and a flow completion time is reduced. It should be noted that, when the timer is set for the packet, when the timer does not expire and the duplicate acknowledgment count of the packet reaches the retransmission threshold, the access device may send the packet to the terminal and reset the timer. When the timer expires, the access device may send the packet to the terminal and reset the duplicate acknowledgment count of the packet.

In some possible implementations, the timer satisfies the following formula: *T_{RTO}* = *min* (*MAX*, *max* (*MIN*, 1.5 * *SRTT*)), where *T_{RTO}* is the timer, *SRTT* is a smoothed RTT, *MAX* is a maximum value of historical WRTT, and *MIN* is a minimum value of the historical WRTT.

According to a second aspect, a packet processing method is provided. The method is applied to an access device. The access device is separately connected to a server and a terminal, and a TCP connection is established between the server and the terminal. After the access device receives a packet sent by the server, when network reference data satisfies a buffering condition, it indicates that network quality is poor, the access device stores the packet in a local buffer, sets a timer for the packet, and then sends the packet to the terminal. If no acknowledgment packet for the packet is received when the timer expires, the access device obtains the packet from the local buffer, and then sends the packet to the terminal. When the network reference data does not satisfy the buffering condition, it indicates that the network quality is good, and the packet is not stored, to reduce storage overheads.

The network reference data includes current WRTT and/or a current packet dequeue interval. In this way, in a case of poor network quality, the packet can be stored in the access device. When an event that the terminal fails to receive the packet times out, the access device can retransmit the packet in the local buffer to the terminal. Compared with packet retransmission by the server, packet retransmission by the access device has fewer steps, and a packet transmission distance is shorter. Therefore, packet retransmission duration can be shortened, to reduce flow completion time.

In some possible implementations, the buffering condition includes: The current WRTT is greater than or equal to a product of historical maximum WRTT and a random coefficient, and the random coefficient is within [0, 1]. Each time a packet is received, a random coefficient may be obtained from [0, 1], and whether the current WRTT is greater than or equal to a product of the historical maximum WRTT and the random coefficient is determined. If the current WRTT is greater than or equal to the product, it indicates that quality of a current wireless link is poor, and the packet is stored. If the current WRTT is less than the product, it indicates that the quality of the current wireless link is good, and the packet is not stored. Because a buffer capacity of the access device is limited, if the random coefficient is replaced with a fixed coefficient, the local buffer is likely to be insufficient. In this case, a subsequent packet is lost, and a tail packet cannot be retransmitted. When the random coefficient is used, packet probabilistic caching exhibits randomness, and storage overheads can be reduced. Practical testing shows that compared with a buffering condition using the fixed coefficient, the buffering condition using the random coefficient can improve a success rate of retransmission of a tail packet and effectively reduce flow completion time.

In some possible implementations, the buffering condition includes: The current packet dequeue interval is greater than or equal to a preset time interval. If the current packet dequeue interval is greater than or equal to the preset time interval, it indicates that quality of a wireless link is poor, and the packet is buffered. If the current packet dequeue interval is less than the preset time interval, it indicates that quality of the wireless link is good, and the packet is not stored.

In some possible implementations, the buffering condition includes: The current WRTT is greater than or equal to the product of the historical maximum WRTT and the random coefficient, and the current packet dequeue interval is greater than or equal to the preset time interval. If the current WRTT is greater than or equal to the product of the historical maximum WRTT and the random coefficient, and the current packet dequeue interval is greater than or equal to the preset time interval, it indicates that quality of the wireless link is poor, and the packet is buffered. If the current WRTT is less than the product of the historical maximum WRTT and the random coefficient, or the current packet dequeue interval is less than the preset time interval, it indicates that quality of the wireless link is poor, and the packet is not stored.

In some possible implementations, the timer satisfies the following formula: *T_{RTO}* = *min* (*MAX*, *max* (*MIN*, 1.5 * *SRTT*)). *T_{RTO}* is the timer, *SRTT* is a smooth RTT, *MAX* is a maximum value of historical WRTT, and *MIN* is a minimum value of the historical WRTT. Experimental data shows that the timer can shorten time overheads of timeout-based retransmission, to shorten FCT.

According to a third aspect, an access device is provided, including a first communication module, a processing module, and a second communication module. The first communication module is configured to receive a packet sent by a server. The processing module is configured to: when network reference data satisfies a buffering condition, store the packet in a local buffer. The second communication module is configured to: send the packet to a terminal, and receive an acknowledgment packet sent by the terminal. When a flow identifier of the acknowledgment packet matches a flow identifier of the packet, and an acknowledgment number of the acknowledgment packet is the same as a sequence number of the packet, the processing module is further configured to: when the acknowledgment packet and the packet belong to a same data flow and the acknowledgment number of the acknowledgment packet is the same as the sequence number of the packet, increase a duplicate acknowledgment count of the packet by one; and when the duplicate acknowledgment count of the packet reaches a retransmission threshold, obtain the packet from the local buffer. The second communication module is further configured to send the packet to the terminal.

In some possible implementations, the buffering condition includes: Current WRTT is greater than or equal to a product of historical maximum WRTT and a random coefficient, and/or a current packet dequeue interval is greater than or equal to a preset time interval, where the random coefficient is within [0, 1].

In some possible implementations, when the network reference data does not satisfy the buffering condition, the processing module is further configured to skip storing the packet.

In some possible implementations, when the network reference data satisfies the buffering condition, the processing module is further configured to: when a packet data volume of the local buffer exceeds a buffering threshold and the current WRTT is greater than minimum WRTT of buffered packets, delete a packet corresponding to the minimum WRTT from the local buffer.

In some possible implementations, the processing module is further configured to delete, from the local buffer, a target packet of a data flow to which the acknowledgment packet belongs.

In some possible implementations, the second communication module is further configured to receive a finish packet sent by the terminal; and the processing module is further configured to delete, from the local buffer, a packet of a data flow to which the finish packet belongs.

For term explanations, steps performed by the modules, and technical effects in the third aspect, refer to corresponding descriptions in the first aspect.

According to a fourth aspect, an access device is provided, including a first communication module, a processing module, and a second communication module. The first communication module is configured to receive a packet sent by a server. The processing module is configured to: when network reference data satisfies a buffering condition, store the packet in a local buffer and set a timer for the packet. The second communication module is configured to send the packet to a terminal. The processing module is further configured to: when the timer expires, obtain the packet from the local buffer if no acknowledgment packet is received. The second communication module is further configured to send the packet to the terminal.

In some possible implementations, the buffering condition includes: Current WRTT is greater than or equal to a product of historical maximum WRTT and a random coefficient, and/or a current packet dequeue interval is greater than or equal to a preset time interval, where the random coefficient is within [0, 1].

In some possible implementations, when the network reference data does not satisfy the buffering condition, the processing module is further configured to skip storing the packet.

In some possible implementations, the timer satisfies the following formula: *T_{RTO}* = *min* (*MAX*, *max* (*MIN*, 1.5 * *SRTT*)), where *T_{RTO}* is the timer, *SRTT* is a smoothed RTT, *MAX* is a maximum value of historical WRTT, and *MIN* is a minimum value of the historical WRTT.

In some possible implementations, when the network reference data satisfies the buffering condition, the processing module is further configured to: when a packet data volume of the local buffer exceeds a buffering threshold and the current WRTT is greater than minimum WRTT of buffered packets, delete a packet corresponding to the minimum WRTT from the local buffer.

In some possible implementations, the processing module is further configured to delete, from the local buffer, a target packet of a data flow to which the acknowledgment packet belongs.

In some possible implementations, the second communication module is further configured to receive a finish packet sent by the terminal; and the processing module is further configured to delete, from the local buffer, a packet of a data flow to which the finish packet belongs.

For term explanations, steps performed by the modules, and technical effects in the fourth aspect, refer to corresponding descriptions in the second aspect.

According to a fifth aspect, an access device is provided, including a processor and a memory. The processor is configured to execute instructions stored in the memory, so that the access device performs the method according to any one of the first aspect or the possible implementations of the first aspect.

According to a sixth aspect, an access device is provided, including a processor and a memory. The processor is configured to execute instructions stored in the memory, so that the access device performs the method according to any one of the second aspect or the possible implementations of the second aspect.

According to a seventh aspect, a computer-readable storage medium is provided, including computer program instructions. When the computer program instructions are executed by a compute device, the compute device performs the method according to any one of the first aspect or the possible implementations of the first aspect.

According to an eighth aspect, a computer-readable storage medium is provided, including computer program instructions. When the computer program instructions are executed by a compute device, the compute device performs the method according to any one of the second aspect or the possible implementations of the second aspect.

According to a ninth aspect, a computer program product including instructions is provided. When the instructions are run by a compute device, the compute device is caused to perform the method according to any one of the first aspect or the possible implementations of the first aspect.

According to a tenth aspect, a computer program product including instructions is provided. When the instructions are run by a compute device, the compute device is caused to perform the method according to any one of the second aspect or the possible implementations of the second aspect.

According to an eleventh aspect, a chip system is provided, including a processor and a memory connected to each other. The processor may run instructions stored in the memory, so that the chip system performs the method according to the first aspect or the second aspect.

According to a twelfth aspect, a chip system is provided, including a processor, configured to support an access device in implementing functions in the foregoing aspects, for example, sending or processing data and/or information in the foregoing methods. In a possible design, the chip system further includes a memory, where the memory is configured to store program instructions and data required by the access device. The chip system may include a chip, or may include a chip and another discrete component.

### BRIEF DESCRIPTION OF DRAWINGS

FIG. 1 is a diagram of an application scenario according to an embodiment of this application;
FIG. 2 is a diagram of packet retransmission by an access device according to an embodiment of this application;
FIG. 3 is a diagram of a structure of an access device according to an embodiment of this application; and
FIG. 4 is a flowchart of a packet processing method according to an embodiment of this application;
FIG. 5 is a diagram of a packet processing method according to an embodiment of this application;
FIG. 6 is another flowchart of a packet processing method according to an embodiment of this application;
FIG. 7 is another diagram of a packet processing method according to an embodiment of this application; and
FIG. 8 is another diagram of a structure of an access device according to an embodiment of this application.

### DESCRIPTION OF EMBODIMENTS

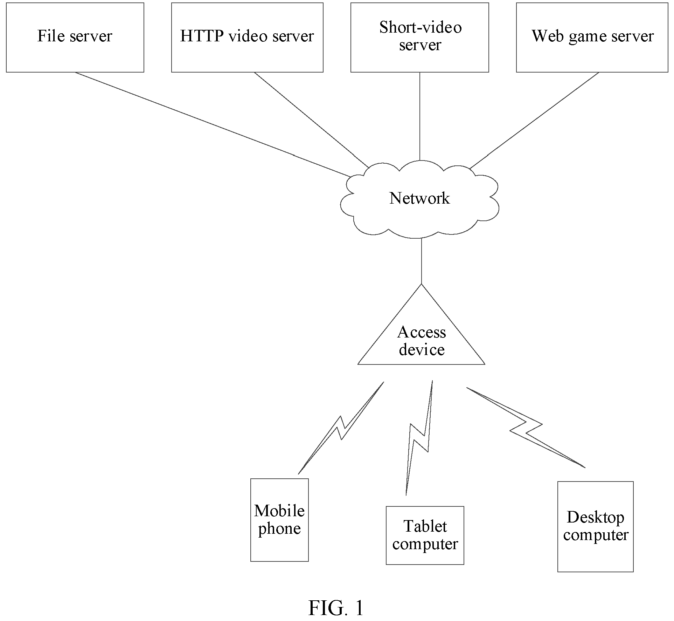

A packet processing method in this application may be applied to a communication system. The communication system includes a server, an access device, and a terminal. Refer to FIG. 1. In an example, servers include a file server, a hypertext transfer protocol (hypertext transfer protocol, HTTP) video server, a short-video server, and a web game server. Terminals include a mobile phone, a tablet computer, and a desktop computer. The server is connected to the access device through a network, and the access device is connected to the terminal through a wireless link. The network includes but is not limited to the internet. It should be understood that the server and the terminal shown in FIG. 1 are illustrative examples. The server in this application may be another type of server, and the terminal may be another type of electronic device. The access device may be, but is not limited to, a wireless router, an access point, or a base station.

In an instance of a web service, 70% of lost packets are retransmitted through RTO. In an RTO packet retransmission process, retransmission duration increases exponentially as a quantity of retransmissions increases. Therefore, in a case of poor network quality (for example, an unstable wireless link or interference), RTO duration may reach 4 to 200 times RTT. This phenomenon is referred to as a long tail problem, which severely affects user experience.

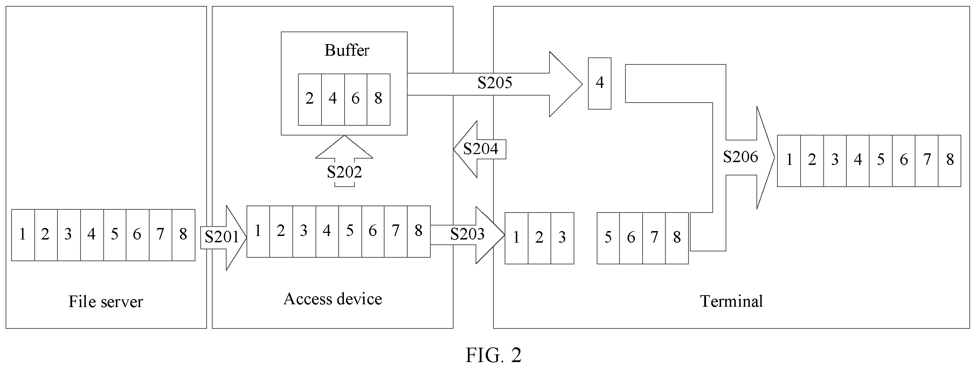

To shorten packet retransmission duration, this application provides a packet processing method, so that in a case of poor network quality, an access device between a server and a terminal stores a packet, and the access device retransmits the packet. The following describes the packet processing method. Refer to FIG. 2. In an example, the packet processing method in this application includes the following steps.

S201: A file server sends a packet 1 to a packet 8 to an access device.

S202: The access device selects the packet 2, the packet 4, the packet 6, and the packet 8 from the packet 1 to the packet 8 for buffering.

S203: The access device sends the packet 1 to the packet 8 to a terminal. The terminal receives the packet 1 to the packet 3 and the packet 5 to the packet 8, and the packet 4 is lost.

S204: The terminal sends an ACK to the access device.

Each time the terminal receives a packet, the terminal returns an ACK. For example, after receiving the packet 3, the terminal feeds back an ACK to the access device. An acknowledgment number of the ACK is 4, and indicates that the terminal requests to receive the packet 4. After receiving the packet 5, the packet 6, and the packet 7, the terminal feeds back an ACK to the access device each time. Acknowledgment numbers of the three ACKs are all 4, and the three ACKs are also referred to as duplicate acknowledgment packets.

S205: The access device sends the packet 4 to the terminal.

When receiving the ACK fed back based on the packet 7, that is, when receiving a 3^{rd} duplicate acknowledgment packet, the access device obtains the packet 4 from a buffer based on the acknowledgment number, and sends the packet 4 to the terminal.

S206: The terminal obtains a packet sequence including the packet 1 to the packet 8.

It should be noted that steps of sending packets by the HTTP video server, the short-video server, and the web game server are similar to steps of sending packets by the file server. For steps of processing a packet by the access device, refer to corresponding descriptions in the embodiment in FIG. 2, FIG. 4, FIG. 5, FIG. 6, or FIG. 7.

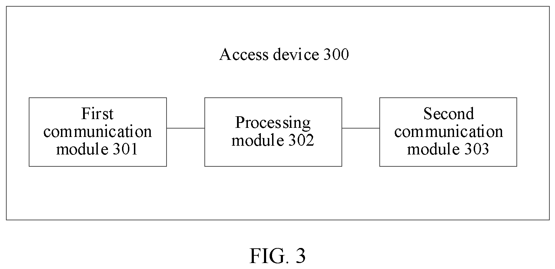

The following describes in detail an access device that implements the packet processing method in this application. Refer to FIG. 3. In an embodiment, an access device 300 in this application includes a first communication module 301, a processing module 302, and a second communication module 303. The first communication module 301 is configured to receive a packet sent by a server. The processing module 302 is configured to: when network reference data satisfies a buffering condition, store the packet in a local buffer. The second communication module 303 is configured to: after sending the packet to a terminal, receive an acknowledgment packet sent by the terminal. The processing module 302 is further configured to: when the acknowledgment packet and the packet belong to a same data flow and an acknowledgment number of the acknowledgment packet is the same as a sequence number of the packet, increase a duplicate acknowledgment count of the packet by one in a flow table; and when the duplicate acknowledgment count of the packet reaches a retransmission threshold, obtain the packet from the local buffer. The second communication module 303 is further configured to send the packet to the terminal. The buffering condition includes: Current WRTT is greater than or equal to a product of historical maximum WRTT and a random coefficient, and/or a current packet dequeue interval is greater than or equal to a preset time interval.

In an optional embodiment, when the network reference data does not satisfy the buffering condition, the processing module 302 is further configured to skip storing the packet.

In an optional embodiment, when the network reference data satisfies the buffering condition, the processing module 302 is further configured to: when a packet data volume of the local buffer exceeds a buffering threshold and the current WRTT is greater than minimum WRTT of buffered packets, delete a packet corresponding to the minimum WRTT from the local buffer.

In another optional embodiment, the processing module 302 is further configured to delete, from the local buffer, a target packet of a data flow to which the acknowledgment packet belongs, where a sequence number of the target packet is prior to the acknowledgment number of the acknowledgment packet.

In another optional embodiment, the first communication module 301 is further configured to receive a finish packet sent by the terminal; and the processing module 302 is further configured to delete, from the local buffer, a packet of a data flow to which the finish packet belongs.

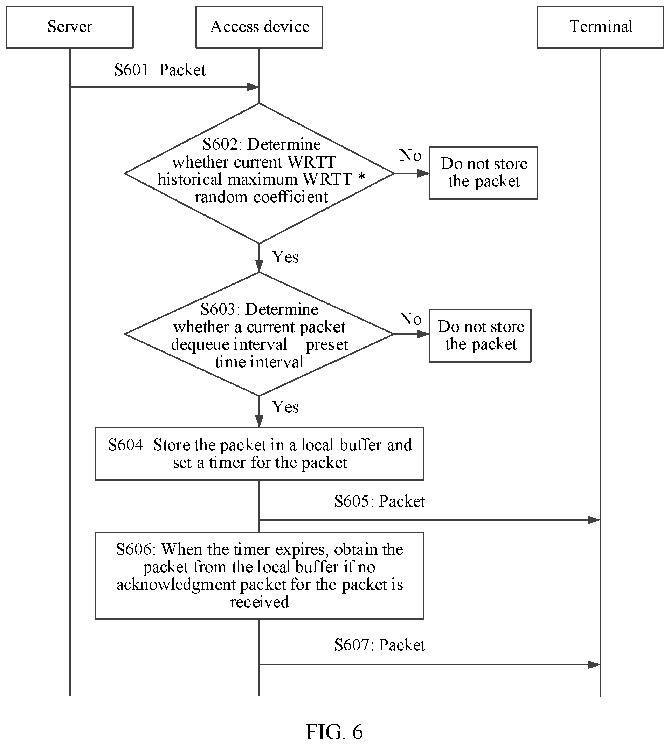

The access device 300 may alternatively perform any function of an access device in the embodiment shown in FIG. 6. In another optional embodiment, the first communication module 301 is configured to receive a packet sent by a server. The processing module 302 is configured to: when network reference data satisfies a buffering condition, store the packet in a local buffer and set a timer for the packet. The second communication module 303 is configured to send the packet to a terminal. The processing module 302 is further configured to: when the timer expires, obtain the packet from the local buffer if no acknowledgment packet for the packet is received. The second communication module 303 is further configured to send the packet to the terminal.

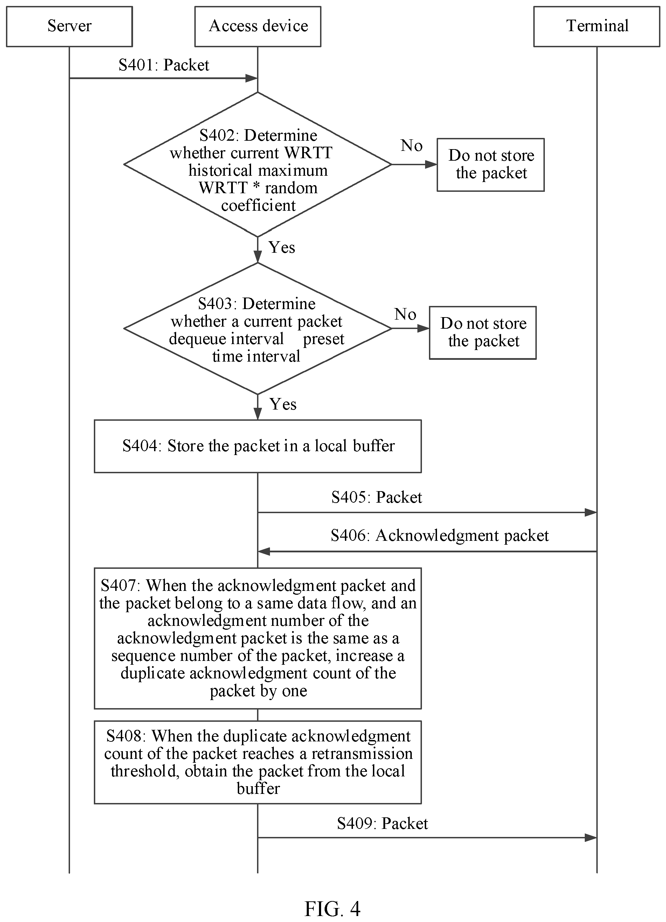

It should be noted that, in another embodiment, the processing module 302 may be configured to perform any step in the packet processing methods shown in FIG. 2, FIG. 4, and FIG. 6, the first communication module 301 may be configured to perform any step in the packet processing methods shown in FIG. 2, FIG. 4, and FIG. 6, and the second communication module 303 may be configured to perform any step in the packet processing methods shown in FIG. 2, FIG. 4, and FIG. 6. Steps implemented by the first communication module 301, the processing module 302, and the second communication module 303 may be specified as required. The first communication module 301, the processing module 302, and the second communication module 303 implement different steps in the packet processing method, to implement all functions of the compute apparatus 300. For term explanations and technical effects in the embodiment shown in FIG. 3, refer to corresponding descriptions in the embodiment shown in FIG. 4 or FIG. 6.

The following describes the packet retransmission method in this application. The packet retransmission method in this application includes fast retransmission by the access device and timeout-based retransmission by the access device.

### 1. Fast retransmission by an access device:

Refer to FIG. 4. An embodiment of a packet processing method in this application includes the following steps.

S401: The access device receives a packet sent by a server.

In this embodiment, a TCP connection is established between the server and a terminal, and the packet sent by the server includes a TCP packet header and an internet protocol (internet protocol, IP) packet header.

In a handshake phase of establishing the TCP connection, the access device may obtain a flow identifier of the packet based on a synchronization (synchronize, SYN) packet, and add the flow identifier to a flow table. The access device may configure a plurality of flow tables. For example, flow entries of a first flow table include a flow identifier, a sequence number, and a timer used for timeout-based retransmission. A second flow table includes a flow identifier, an acknowledgment number of a latest acknowledgment packet, and a duplicate acknowledgment count used for fast retransmission. A third flow table includes a flow identifier and a life threshold of a data flow. It should be understood that a flow table type and a flow table attribute in this application are not limited to the foregoing examples, and may be specifically adjusted according to an actual requirement. Optionally, the flow identifier of the packet is an IP quintuple, and the IP quintuple includes a source port, a destination port, a source IP address, a destination IP address, and a transport layer protocol. In another optional manner, the flow identifier of the packet is a hash value obtained by hashing the IP quintuple, and matching the data flow by using the hash value is faster.

S402: The access device determines whether current WRTT ≥ historical maximum WRTT * random coefficient. If yes, S403 is performed. If no, the packet is not stored.

WRTT is round-trip time of a packet between the access device and the terminal. Optionally, the current WRTT is equal to ${T}_{i}^{′} - {T}_{i} , {T}_{i}^{′}$ is a moment at which an acknowledgment packet for an i^{th} packet is received, and *Tᵢ* is a moment at which the i^{th} packet from the server is received, where i is a positive integer. For example, a 10^{th} packet is received at a current moment, and a last ACK received in this case is an ACK for an 8^{th} packet. The current WRTT is calculated based on a moment at which the 8^{th} packet is received and a moment at which the ACK for the 8^{th} packet is received. It should be noted that a packet corresponding to the current WRTT and a packet corresponding to historical WRTT belong to a same data flow, and the historical maximum WRTT is a maximum value in the historical WRTT.

In another optional manner, the current WRTT is equal to $\frac{1}{j + 1} {\sum }_{i - j}^{i} \left({T}_{i}^{′}-{T}_{i}\right) , {T}_{i}^{′}$ is a moment at which an acknowledgment packet for an i^{th} packet is received, and *Tᵢ* is a moment at which the i^{th} packet from the server is received, where j is a positive integer less than i, and a value of j may be set according to an actual situation. This is not limited in this application. In this way, receiving moments of recent several packets and receiving moments of recent several acknowledgment packets are calculated according to a moving average method, to obtain the current WRTT.

Because a buffer capacity of the access device is limited, if the random coefficient is replaced with a fixed coefficient, a local buffer is likely to be insufficient. In this case, a subsequent packet is lost, and a tail packet cannot be retransmitted. When the random coefficient is used, some packets are randomly stored, so that storage overheads can be reduced. Practical testing shows that compared with a buffering condition using the fixed coefficient, the buffering condition using the random coefficient can improve a success rate of retransmission of a tail packet and effectively reduce flow completion time.

S403: The access device determines whether a current packet dequeue interval ≥ preset time interval. If yes, S404 is performed. If no, the packet is not stored. The current packet dequeue interval is a time difference between a current packet dequeue moment and a next packet dequeue moment.

S404: The access device stores the packet in the local buffer.

If the current WRTT ≥ historical maximum WRTT * random coefficient and the current packet dequeue interval ≥ preset time interval, it indicates that quality of a wireless link is poor, and the packet is stored in the local buffer.

S405: The access device sends the packet to the terminal.

S406: The access device receives an acknowledgment packet sent by the terminal.

After receiving an i^{th} packet, the terminal feeds back an acknowledgment packet for the i^{th} packet. The acknowledgment packet is an ACK. For example, if an acknowledgment number of the ACK is 50001, it indicates that the terminal fails to receive a packet with a sequence number being 50001.

If the terminal fails to receive the i^{th} packet, after receiving an (i+1)^{th} packet, the terminal sends an acknowledgment packet for the (i+1)^{th} packet to the access device. In this case, an acknowledgment number carried in the acknowledgment packet for the (i+1)^{th} packet is a sequence number of the i^{th} packet.

S407: When the acknowledgment packet and the packet belong to a same data flow, and an acknowledgment number of the acknowledgment packet is the same as a sequence number of the packet, the access device increases a duplicate acknowledgment count of the packet by one.

If a flow identifier of the acknowledgment packet is the same as a flow identifier of the packet, it indicates that the acknowledgment packet and the packet belong to the same data flow. If the flow identifier of the acknowledgment packet is different from the flow identifier of the packet, it indicates that the acknowledgment packet and the packet belong to different data flows. A value by which the duplicate acknowledgment count is increased may be but is not limited to 1. This may be specifically set according to an actual situation, and is not limited in this application.

Optionally, the flow table includes flow entries shown in Table 1.

**Table 1**

| Flow identifier | Sequence number | Acknowledgment number of a latest acknowledgment packet | Duplicate acknowledgment count |
|---|---|---|---|
| f1 | 50001 | 50001 | 1 |

S408: When the duplicate acknowledgment count of the packet reaches a retransmission threshold, the access device obtains the packet from the local buffer.

S409: The access device sends the packet to the terminal.

The retransmission threshold may be 3, 4, 5, or 6. The retransmission threshold is not limited in this application, and may be specifically set according to an actual situation. When the duplicate acknowledgment count of the packet reaches the retransmission threshold, it indicates that the terminal has not received the packet for a period of time. In this case, the access device obtains the packet from the local buffer, and sends the packet to the terminal, to implement fast retransmission.

In this embodiment, in a case of poor network quality, the packet may be stored in the access device, and when the acknowledgment packet satisfies the retransmission condition, the access device retransmits the packet to the terminal. Compared with packet retransmission by the server, packet retransmission by the access device can effectively shorten a packet retransmission distance, reduce packet retransmission steps, and reduce packet retransmission duration.

In addition, some packets may be buffered in a poor network condition. In this way, a quantity of packets buffered by the access device can be reduced, and storage overheads are reduced.

Furthermore, because the access device may retransmit the packet, and the server does not need to retransmit the packet, packet losses caused by poor network quality between the server and the access device can be reduced.

In addition, when the terminal fails to receive a packet, retransmission may be triggered by sending several acknowledgment packets by the terminal. A retransmission speed is faster than that of timeout-based retransmission.

The network reference data in this application may include the current WRTT and/or the current packet dequeue interval. When the network reference data includes the current WRTT, after S402 is performed in this application, S403 is skipped and S404 is performed. When the network reference data includes the current packet dequeue interval, S402 may be skipped and S403 may be directly performed in this application.

When a quantity of packets stored in the buffer of the access device reaches an upper limit, the network quality may be poor, but a packet cannot be stored. In this application, a packet with a low packet loss probability may be replaced with a packet with a high packet loss probability, to improve reliability of packet retransmission. In another optional embodiment, when the network reference data satisfies the buffering condition, the packet processing method in this application further includes: when a packet data volume of the local buffer exceeds a buffering threshold and the current WRTT is greater than minimum WRTT of buffered packets, deleting a packet corresponding to the minimum WRTT from the local buffer; and then, performing S404.

Optionally, the flow table includes flow entries shown in Table 2.

**Table 2**

| Flow identifier | Sequence number | Duplicate acknowledgment count | WRTT |
|---|---|---|---|
| f1 | 50002 | 1 | WRTT 2 |
| | 50006 | 2 | WRTT 6 |
| f2 | 50004 | 1 | WRTT 4 |
| | 50005 | 2 | WRTT 5 |

Wireless link quality corresponding to the minimum WRTT is generally better than that corresponding to other WRTT, and a probability of retransmission is lower. The packet corresponding to the minimum WRTT in the buffer is replaced with a packet with a larger WRTT, so that a hit rate of a retransmitted packet can be improved in a case of a limited buffer.

This application further provides another method for reducing storage overheads of the access device. In another optional embodiment, the packet processing method in this application further includes: deleting, from the local buffer, a target packet of a data flow to which the acknowledgment packet belongs. If a sequence number of the target packet is prior to the acknowledgment number of the acknowledgment packet, it indicates that the target packet is a duplicate of a packet already received by the terminal, and the packet received by the terminal does not need to be retransmitted. Therefore, deleting the target packet from the local buffer can release buffering space, to reduce storage overheads.

For an acknowledgment packet that does not trigger retransmission, in this application, the access device may forward the acknowledgment packet to the server, to implement transparent transmission of a TCP packet. In an optional embodiment, when a flow identifier of a buffered packet does not match the flow identifier of the acknowledgment packet, it indicates that the locally buffered packet and the acknowledgment packet belong to different data flows, and the acknowledgment packet is sent to the server. For a data flow packet that is not stored in the local buffer, the access device transparently transmits the acknowledgment packet, so that the server and the terminal can perform packet transmission based on TCP.

In another optional embodiment, the packet processing method in this application further includes: When a sequence number of a buffered packet is different from the acknowledgment number of the acknowledgment packet, it indicates that a packet requested by the acknowledgment packet does not exist in the local buffer, and the acknowledgment packet is sent to the server. For a packet that is not stored in the local buffer, the access device transparently transmits the acknowledgment packet, so that the server and the terminal can perform packet transmission based on TCP.

In another optional embodiment, the packet processing method in this application further includes: when the acknowledgment number of the acknowledgment packet is the same as the sequence number of the packet and the duplicate acknowledgment count of the packet is less than the retransmission threshold, sending the acknowledgment packet to the server. For a packet that has been stored in the local buffer, when the duplicate acknowledgment count is less than the retransmission threshold, the access device transparently transmits the acknowledgment packet, so that the server and the terminal can perform packet transmission based on TCP. In this case, the access device does not retransmit the packet, so that a quantity of packet retransmissions can be reduced, and resource overheads for packet retransmissions can be reduced.

After the TCP connection ends, a packet does not need to be retransmitted. In this application, a packet related to the TCP connection in the buffer may be cleared. In another optional embodiment, the packet processing method in this application further includes: receiving a finish packet sent by the terminal, and deleting, from the local buffer, a packet of a data flow to which the finish packet belongs.

In this embodiment, the finish packet may be but is not limited to a FIN packet or a FIN ACK packet. When the TCP connection ends, the packet of the data flow related to the TCP connection in the local buffer is deleted, so that storage overheads can be reduced, and an available buffer can be increased.

In another optional embodiment, the packet processing method in this application further includes: receiving a finish packet sent by the server, and deleting, from the local buffer, a packet of a data flow to which the finish packet belongs.

In this embodiment, in this way, when the TCP connection ends, the packet of the data flow related to the TCP connection in the local buffer may also be deleted, to increase the available buffer.

In another optional embodiment, the packet processing method in this application further includes: obtaining a lifetime of a data flow; and when the lifetime of the data flow is greater than a life threshold, deleting a packet of the data flow from the local buffer.

Optionally, the life threshold included in the flow table may be shown in Table 3.

**Table 3**

| Flow identifier | Lifetime threshold |
|---|---|
| f1 | L1 |
| f2 | L2 |

When the lifetime of the data flow is greater than the life threshold, it indicates that the data flow is a long flow, and the access device may delete a locally buffered long flow and a locally buffered flow entry of the long flow, to reduce storage overheads. Compared with maintaining all data flows, maintaining only short flows can reduce computing overheads and storage overheads.

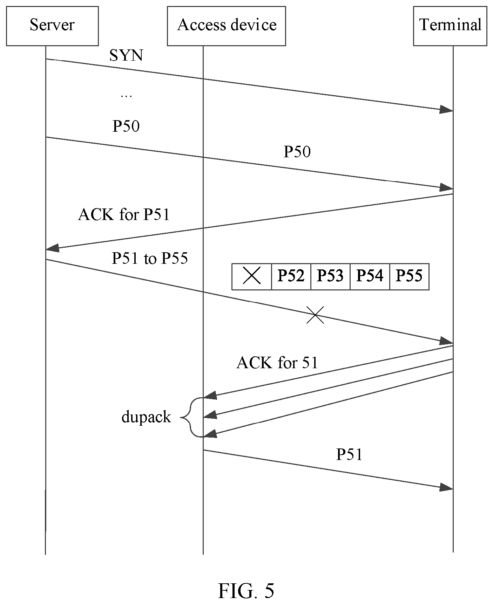

For ease of understanding, the following describes the packet processing method in this application by using a specific application scenario. Refer to FIG. 5. In an example, a server sends a SYN packet to an access device, the access device sends the SYN packet to a terminal, and a TCP connection is established after three handshakes. Then, the server continuously sends packets to the access device. Each time the terminal receives a data packet, the terminal feeds back an ACK. A packet P50 is used as an example. After the access device sends P50 to the terminal, the terminal feeds back an ACK to the access device, that is, an ACK for P51.

The server sends P51 to P55 to the access device, and the access device obtains current WRTT. When the current WRTT is greater than or equal to a WRTT threshold, the access device stores P51 to P55 in a local buffer. The access device sends P51 to P55 to the terminal. A packet loss is caused by network quality. Therefore, the terminal fails to receive P51, and then the terminal feeds back an ACK to the access device, that is, the ACK for P51. After receiving P52 to P54, the terminal feeds back ACKs (that is, the ACK for P51). The three ACKs are duplicate acknowledgment packets (that is, dupack). When a quantity of duplicate acknowledgment packets reaches 3, the access device obtains P51 from the local buffer, and sends P51 to the terminal.

### 2. Timeout-based retransmission by an access device:

Refer to FIG. 6. Another embodiment of a packet processing method in this application includes the following steps.

S601: The access device receives a packet sent by a server.

S602: The access device determines whether current WRTT ≥ historical maximum WRTT * random coefficient. If yes, S603 is performed. If no, the packet is not stored.

S603: The access device determines whether a current packet dequeue interval ≥ preset time interval. If yes, S604 is performed. If no, the packet is not stored.

S604: The access device stores the packet in a local buffer, and sets a timer for the packet.

It should be noted that a process of buffering the packet in S601 to S604 is similar to that in S401 to S404. For details, refer to the corresponding descriptions in the embodiment shown in FIG. 4.

Optionally, the timer satisfies the following formula: *T_{RTO}* = *min* (*MAX*, *max* (*MIN*, 1.5 * *SRTT*)), where *T_{RTO}* is the timer, *SRTT* is a smoothed RTT, *MAX* is a maximum value of historical WRTT, and *MIN* is a minimum value of the historical WRTT. For an i^{th} packet, *MAX* is a maximum value of first (i-1) RTTs, *MIN* is a minimum value of the first (i-1) RTTs, and *SRTT* is an (i-1)^{th} smoothed RTT. Optionally, *SRTT*_{*i*-1} = 0.8*SRTT*_{*i*-2} + 0.2*WRTT*_{*i*-1}.

The access device may set a flow table including a timer. Optionally, the flow table includes flow entries shown in Table 4.

**Table 4**

| Flow identifier | Packet attribute |
|---|---|
| f1 | {p2, WRTT 2, Timer} |
| | {p6, WRTT 6, Timer} |
| f2 | {p4, WRTT 4, Timer} |
| | {p5, WRTT 5, Timer} |

In Table 4, p2, p4, p5, and p6 are sequence numbers, WRTT 2, WRTT 4, WRTT 5, and WRTT 6 are WRTT, and WRTT is optional. Timer is a timer.

S605: The access device sends the packet to the terminal.

S606: When the timer expires, the access device obtains the packet from the local buffer if no acknowledgment packet for the packet is received.

Specifically, after the access device sends the i^{th} packet, if an acknowledgment number of an ACK fed back by the terminal is a sequence number of the i^{th} packet, it indicates that the terminal fails to receive an acknowledgment packet for the i^{th} packet. If the acknowledgment number of the ACK fed back by the terminal is greater than the i^{th} sequence number, it indicates that the terminal receives the acknowledgment packet for the i^{th} packet. If no acknowledgment packet for the packet is received when the timer expires, it indicates that the packet times out.

S607: The access device sends the packet to the terminal.

In this embodiment, in a case of poor network quality, the packet may be stored in the access device. When receiving the packet by the terminal times out, the access device can retransmit the packet in the local buffer to the terminal. Compared with packet retransmission by the server, packet retransmission by the access device has fewer steps, and a packet transmission distance is shorter. Therefore, packet retransmission duration can be shortened, to reduce flow completion time.

The network reference data in this application may include the current WRTT and/or the current packet dequeue interval. When the network reference data includes the current WRTT, after S602 is performed in this application, S603 is skipped and S604 is performed. When the network reference data includes the current packet dequeue interval, S602 may be skipped and S603 may be directly performed in this application.

Based on the embodiment shown in FIG. 6, the packet processing method in this application further includes the following optional embodiments:
In another optional embodiment, the packet processing method in this application further includes: deleting, from the local buffer, a target packet of a data flow to which the acknowledgment packet belongs.

In an optional embodiment, when a flow identifier of a buffered packet does not match a flow identifier of the acknowledgment packet, it indicates that the locally buffered packet and the acknowledgment packet belong to different data flows, and the acknowledgment packet is sent to the server.

In another optional embodiment, the packet processing method in this application further includes: When a sequence number of a buffered packet is different from the acknowledgment number of the acknowledgment packet, it indicates that a packet requested by the acknowledgment packet does not exist in the local buffer, and the acknowledgment packet is sent to the server.

In another optional embodiment, the packet processing method in this application further includes: when the acknowledgment number of the acknowledgment packet is the same as the sequence number of the packet and a duplicate acknowledgment count of the packet is less than a retransmission threshold, sending the acknowledgment packet to the server.

In another optional embodiment, the packet processing method in this application further includes: receiving a finish packet sent by the server, and deleting, from the local buffer, a packet of a data flow to which the finish packet belongs.

In another optional embodiment, the packet processing method in this application further includes: obtaining a lifetime of a data flow; and when the lifetime of the data flow is greater than a life threshold, deleting a packet of the data flow from the local buffer.

For steps and technical effects in the optional embodiment of the embodiment shown in FIG. 6, refer to the foregoing corresponding descriptions. Details are not described herein again.

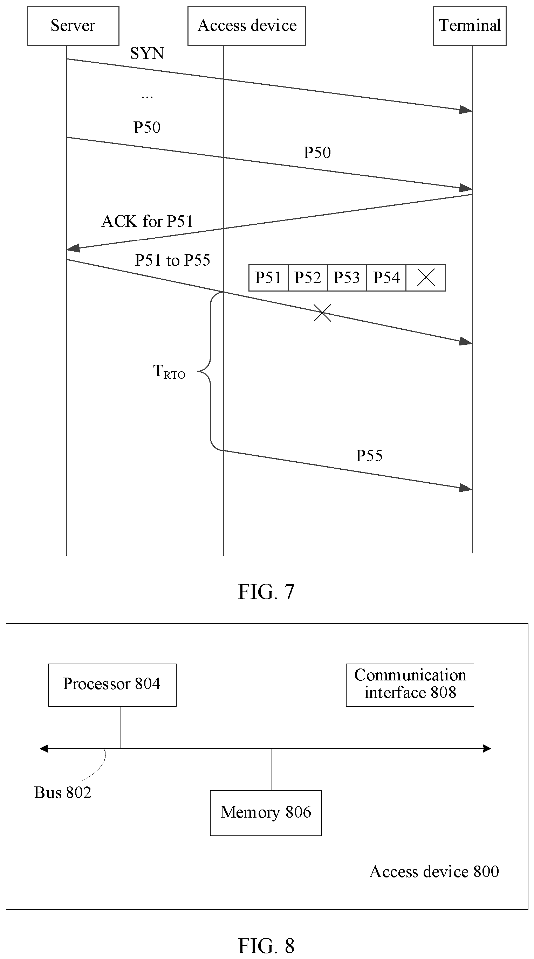

For ease of understanding, the following describes the packet processing method in the embodiment shown in FIG. 6 by using a specific application scenario. Refer to FIG. 7. In an example, a server sends a SYN packet to an access device, the access device sends the SYN packet to a terminal, and a TCP connection is established after three handshakes. Then, the server continuously sends packets to the access device. A packet P50 is used as an example. After the access device sends P50 to the terminal, the terminal feeds back an ACK to the access device, that is, an ACK for P51.

The server sends P51 to P55 to the access device, and the access device obtains current WRTT. When the current WRTT is greater than or equal to a WRTT threshold, the access device stores P51 to P55 in a local buffer, and sets a timer (T_{RTO}) for each packet. The access device sends P51 to P55 to the terminal. A packet loss is caused by network quality. Therefore, the terminal fails to receive P55, and then the terminal feeds back an ACK to the access device, that is, an ACK for P55. If the access device fails to receive an acknowledgment packet for P55 in T_{RTO}, that is, fails to receive a packet with an acknowledgment number greater than a sequence number of P55, the access device determines that a timer of P55 expires. When the timer of P55 expires, the access device obtains P55 from the local buffer, and sends P55 to the terminal.

Refer to FIG. 8. This application provides an access device 800. The access device 800 includes a bus 802, a processor 804, a memory 806, and a communication interface 808. The processor 804, the memory 806, and the communication interface 808 are connected through the bus 802. It should be understood that a quantity of processors and a quantity of memories in the access device 800 are not limited in this application.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), such as a random access memory (random access memory, RAM). The memory 806 may further include a non-volatile memory (non-volatile memory), for example, a read-only memory (read-only memory, ROM), a flash memory, a mechanical hard disk drive (hard disk drive, HDD), or a solid state drive (solid state drive, SSD). The memory 806 stores executable program code, and the processor 804 executes the executable program code to implement the packet processing method. Specifically, the memory 806 stores instructions used to perform the packet processing method.

The communication interface 808 uses a transceiver module, for example, but not limited to, a network interface card or a transceiver, to implement communication between the access device 800 and another device or a communication network.

It should be noted that the processor 804 may implement a function of the processing module 302. The communication interface 808 may implement functions of the first communication module 301 and the second communication module 303 under control of the processor 804.

This application provides a computer-readable storage medium. The computer-readable storage medium stores a computer program. When the computer program is run on a computer, the computer is caused to perform the packet processing method in the foregoing embodiments or the optional embodiments.

This application further provides a computer program product. When the computer program product runs on a computer, the computer is caused to perform the packet processing method in the foregoing embodiments or the optional embodiments.

This application further provides a chip system. The chip system includes a processor and a memory that are coupled to each other. The memory is configured to store a computer program or instructions. The processor is configured to execute the computer program or the instructions stored in the memory, so that an access device performs the steps performed by the access device in the foregoing embodiments. Optionally, the memory is a memory, such as a register or a cache, in a chip. The memory may alternatively be a memory, such as a read-only memory (read-only memory, ROM), another type of static storage device that can store static information and instructions, or a random access memory (random access memory, RAM), that is located outside the chip and is in a site. The processor described above may be a general-purpose central processing unit, a microprocessor, an application-specific integrated circuit (application-specific integrated circuit, ASIC), or one or more integrated circuits configured to implement the foregoing packet processing method.

The foregoing embodiments are merely intended to describe the technical solutions of this application, but not intended to limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A packet processing method, wherein the method is applied to an access device, the access device is separately connected to a server and a terminal, a transmission control protocol TCP connection is established between the server and the terminal, and the method comprises:
receiving a packet sent by the server;
when network reference data satisfies a buffering condition, storing the packet in a local buffer, wherein the network reference data comprises at least one of current wireless round-trip time WRTT or a current packet dequeue interval;
sending the packet to the terminal;
receiving an acknowledgment packet sent by the terminal;
when the acknowledgment packet and the packet belong to a same data flow, and an acknowledgment number of the acknowledgment packet is the same as a sequence number of the packet, increasing a duplicate acknowledgment count of the packet by one;
when the duplicate acknowledgment count of the packet reaches a retransmission threshold, obtaining the packet from the local buffer; and
sending the packet to the terminal.

2. The method according to claim 1, wherein the buffering condition comprises: the current WRTT is greater than or equal to a product of historical maximum WRTT and a random coefficient, and/or the current packet dequeue interval is greater than or equal to a preset time interval, wherein the random coefficient is within [0, 1].

3. The method according to claim 1, wherein the method further comprises:
when the network reference data does not satisfy the buffering condition, skipping storing the packet.

4. The method according to claim 1, wherein before storing the packet in the local buffer, the method further comprises:
when a packet data volume of the local buffer exceeds a buffering threshold and the current WRTT is greater than minimum WRTT of buffered packets, deleting a packet corresponding to the minimum WRTT from the local buffer.

5. The method according to any one of claims 1 to 4, wherein the method further comprises:
deleting, from the local buffer, a target packet of a data flow to which the acknowledgment packet belongs, wherein a sequence number of the target packet is prior to the acknowledgment number of the acknowledgment packet.

6. The method according to any one of claims 1 to 4, wherein the method further comprises:
receiving a finish packet sent by the terminal; and
deleting, from the local buffer, a packet of a data flow to which the finish packet belongs.

7. A packet processing method, wherein the method is applied to an access device, the access device is separately connected to a server and a terminal, a transmission control protocol TCP connection is established between the server and the terminal, and the method comprises:
receiving a packet sent by the server;
when network reference data satisfies a buffering condition, storing the packet in a local buffer, and setting a timer for the packet, wherein the network reference data comprises at least one of current wireless round-trip time WRTT or a current packet dequeue interval;
sending the packet to the terminal;
when the timer expires, obtaining the packet from the local buffer if no acknowledgment packet for the packet is received; and
sending the packet to the terminal.

8. The method according to claim 7, wherein the buffering condition comprises: the current WRTT is greater than or equal to a product of historical maximum WRTT and a random coefficient, and/or the current packet dequeue interval is greater than or equal to a preset time interval, wherein the random coefficient is within [0, 1].

9. The method according to claim 7, wherein the method further comprises:
when the network reference data does not satisfy the buffering condition, skipping storing the packet.

10. The method according to any one of claims 7 to 9, wherein the timer satisfies the following formula:${T}_{RTO} = min \left(\left(MAX, maxMIN, 1.5 ∗ SRTT\right)\right) ,$ wherein
T_{RTO} is the timer, SRTT is smoothed RTT, MAX is the historical maximum WRTT, and MIN is historical minimum WRTT.

11. An access device, comprising:
a first communication module, configured to receive a packet sent by a server;
a processing module, configured to: when network reference data satisfies a buffering condition, store the packet in a local buffer, wherein the network reference data comprises at least one of current wireless round-trip time WRTT or a current packet dequeue interval; and
a second communication module, configured to: send the packet to a terminal, and receive an acknowledgment packet sent by the terminal, wherein
the processing module is further configured to: when the acknowledgment packet and the packet belong to a same data flow, and an acknowledgment number of the acknowledgment packet is the same as a sequence number of the packet, increase a duplicate acknowledgment count of the packet by one; and when the duplicate acknowledgment count of the packet reaches a retransmission threshold, obtain the packet from the local buffer; and
the second communication module is further configured to send the packet to the terminal.

12. The access device according to claim 11, wherein the buffering condition comprises: the current WRTT is greater than or equal to a product of historical maximum WRTT and a random coefficient, and/or the current packet dequeue interval is greater than or equal to a preset time interval, wherein the random coefficient is within [0, 1].

13. The access device according to claim 11, wherein when the network reference data does not satisfy the buffering condition, the processing module is further configured to skip storing the packet.

14. The access device according to claim 11, wherein when the network reference data satisfies the buffering condition, the processing module is further configured to: when a packet data volume of the local buffer exceeds a buffering threshold and the current WRTT is greater than minimum WRTT of buffered packets, delete a packet corresponding to the minimum WRTT from the local buffer.

15. The access device according to any one of claims 11 to 14, wherein the processing module is further configured to delete, from the local buffer, a target packet of a data flow to which the acknowledgment packet belongs, wherein a sequence number of the target packet is prior to the acknowledgment number of the acknowledgment packet.

16. The access device according to any one of claims 11 to 14, wherein the second communication module is further configured to receive a finish packet sent by the terminal; and the processing module is further configured to delete, from the local buffer, a packet of a data flow to which the finish packet belongs.

17. An access device, comprising:
a first communication module, configured to receive a packet sent by a server;
a processing module, configured to: when network reference data satisfies a buffering condition, store the packet in a local buffer, and set a timer for the packet; and
a second communication module, configured to send the packet to a terminal, wherein
the processing module is further configured to: when the timer expires, obtain the packet from the local buffer if no acknowledgment packet for the packet is received; and
the second communication module is further configured to send the packet to the terminal.

18. The access device according to claim 17, wherein the buffering condition comprises: the current WRTT is greater than or equal to a product of historical maximum WRTT and a random coefficient, and/or the current packet dequeue interval is greater than or equal to a preset time interval, wherein the random coefficient is within [0, 1].

19. The access device according to claim 17, wherein when the network reference data does not satisfy the buffering condition, the processing module is further configured to skip storing the packet.

20. The access device according to any one of claims 17 to 19, wherein the timer satisfies the following formula:${T}_{RTO} = min \left(\left(MAX, maxMIN, 1.5 ∗ SRTT\right)\right) ,$ wherein T_{RTO} is the timer, SRTT is smoothed RTT, MAX is the historical maximum WRTT, and MIN is historical minimum WRTT.

21. An access device, comprising a processor and a memory, wherein the processor is configured to execute instructions stored in the memory, to cause the access device to perform the method according to any one of claims 1 to 10.

22. A computer-readable storage medium, comprising computer program instructions, wherein when the computer program instructions are executed by a compute device, the compute device performs the method according to any one of claims 1 to 10.

23. A computer program product comprising instructions, wherein when the instructions are run by a compute device, the compute device is caused to perform the method according to any one of claims 1 to 10.
